(19) **Europäisches Patentamt**

**European Patent Office**

**Office européen des brevets**

(11) **EP 1 348 676 B1**

(12) **EUROPÄISCHE PATENTSCHRIFT**

(45) Veröffentlichungstag und Bekanntmachung des Hinweises auf die Patenterteilung:
**29.12.2004 Patentblatt 2004/53**

(51) Int Cl.⁷: **C03C 25/40**, C09D 183/04

(21) Anmeldenummer: **03006609.6**

(22) Anmeldetag: **25.03.2003**

(54) **Präparation und Verfahren zum Behandeln von Hybridgarnen**

Preparation and method for treating hybrid yarns

Préparation et méthode de traitement de fils hybrides

(84) Benannte Vertragsstaaten:
**AT BE BG CH CY CZ DE DK EE ES FI FR GB GR HU IE IT LI LU MC NL PT SE SI SK TR**

(30) Priorität: **30.03.2002 DE 10214482**

(43) Veröffentlichungstag der Anmeldung:
**01.10.2003 Patentblatt 2003/40**

(73) Patentinhaber: **Johns Manville Europe GmbH 60323 Frankfurt am Main (DE)**

(72) Erfinder:
• **Momberg, Heinz**
  **97907 Hasloch (DE)**
• **Müssig, Edgar**
  **97892 Kreuzwertheim (DE)**
• **Seiss, W., Dr.**
  **24534 Neumunster (DE)**

(74) Vertreter: **Knoblauch, Andreas, Dr.-Ing.**
**Schlosserstrasse 23**
**60322 Frankfurt (DE)**

(56) Entgegenhaltungen:
**EP-A- 0 842 967**    **DE-A- 10 012 814**
**DE-A- 10 037 723**    **DE-A- 19 818 046**
**FR-A- 1 397 196**

EP 1 348 676 B1

## Beschreibung

Die Erfindung betrifft eine Präparation zur Behandlung von Hybridgarnen aus Glas- und Polyolefinfasern, insbesondere aus Glas- und Polypropylenfasern, die Silanverbindungen aufweist. Ferner betrifft die Erfindung ein Verfahren zum Behandeln von Hybridgarnen aus Glas- und Polyolefinfasern, insbesondere aus Glas- und Polypropylenfasern, bei dem Silanole auf die Fasern aufgetragen werden.

Faserverbundwerkstoffe spielen in der heutigen Technik eine herausragende Rolle in vielen unterschiedlichen Konstruktionsbereichen. Sie weisen eine hohe mechanische Stabilität bei einem relativ geringen Gewicht auf. Für Standardanwendungen, die keinen extremen Beanspruchungen ausgesetzt sind, haben sich vor allem Polymerverbundsysteme mit Glasfaserverstärkung durchgesetzt. Hierbei werden Glasfasern als Verstärkung auf unterschiedliche Weise in eine Polymer-Matrix eingebracht.

Eine interessante, weil einfach zu handhabende Möglichkeit bietet die Verwendung von sogenannten Hybridgarnen. Hybridgarne enthalten sowohl Glasfasern als auch die umgebende Matrix in Form von Polymerfasern oder -fäden.

Bei praktisch allen Herstellmethoden für Faserverbundsysteme ist eine ausreichende Haftung zwischen den Glasfasern und der Polymermatrix wichtig. Die Polymermatrix ist in vielen Fällen thermoplastisch ausgebildet. Hierzu ist ein geeignetes Schlichtesystem erforderlich. Das Schlichtesystem muß an die die Glasfasern umgebende Polymermatrix angepaßt sein, um einen funktionierenden Verbund zu schaffen.

Die pysikalisch-chemischen Eigenschaften von Verbundwerkstoffen aus Glasfasern und Polymeren werden unter anderem durch die Affinität, durch die Haftung und durch die Schärfestigkeit an der Grenze Glasfaser-Polymermatrix beeinflußt. Die Aufgabe einer Präparation für Hybridgarne, die sowohl die Glasfasern als auch die Polymerfasern enthält, besteht also darin, sowohl einen ausreichenden Verbund zwischen den Glasfasern und den umgebenden Polymeren herzustellen als auch die Herstell- und Verarbeitbarkeit des Hybridgarnes zu gewährleisten.

Die meisten Polymere, die vereinfachend auch als Harze bezeichnet werden, weisen keine Affinität zum Glas auf. Deswegen versucht man, durch Haftmittel zwischen Glas und Harz eine Brücke zu schaffen, die eine möglichst vollständige Kraftübertragung zwischen Glas und Harz im Verbund, auch Komposite genannt, ermöglicht. Die Haftmittel oder Haftvermittler erhöhen die Adhäsion von Polymeren an der Glasfaseroberfläche. Diese Haftmittel werden der Einfachheit halber zu meist zusammen mit der Glasschlichte bei der Glasfaserherstellung auf die Glasfilamente aufgebracht.

Als Haftmittel dienen meistens organo-funktionelle Silane z.B. Aminopropyltriethoxysilan; γ-Methacryloxypropyltrimethoxysilan, γ-Glicydyloxypropyltrimethoxysilan u.a. deren Menge in der Schlichte von 0 bis 1,0 Gew.-% beträgt. Bevor die Silane der wässrigen Schlichte zugesetzt werden, werden sie meistens zu Silanolen hydrolysiert. Die Hydrolysatlösung ist nur begrenzt stabil und neigt zur Kondensation. Derartige Schlichten (sogenannte Kunststoffschlichten) können außer einem Primer noch andere Zusätze wie z.B. Antistatika oder Emulgatoren, durch die spezielle Wirkungen erreicht werden sollen, enthalten.

Diese weiteren Hilfskomponenten sind allgemein bekannt und beispielsweise in K. L. Löwenstein - The Manufacturing Technology of Continuos Glass Fibres, Elsevier Scientific Publishing Corp. Amsterdam - Oxford - New York, 1983, beschrieben.

Man kann aus den Glasfasern, vor allem wenn sie als Textilglasfasern ausgebildet sind, Textilglasfaserprodukte, etwa textile Flächenmaterialien, herstellen. Derartige Textilglasfaserprodukte sind, wenn sie mit Kunststoffschlichten versehen werden, zur direkten Verarbeitung mit Kunstharzen geeignet. In Abhängigkeit vom Harz muß der geeignete Filmbildner und der geeignete Haftvermittler gewählt werden. Die Glaszusammensetzung und die Schlichtezusammensetzung beeinflussen dabei die phsykalisch-chemischen Eigenschaften der Textilglasfaserprodukte. Die chemische Glaszusammensetzung wirkt sich auf die mechanischen und auf die Adhäsionseigenschaften der Glasfasern aus. Die Glasfasern, insbesondere C- und A-Glasfasern unterliegen aufgrund des hohen Alkalioxydgehaltes Korrosionsprozessen, die ihre physikalisch-chemischen Eigenschaften sowie die Matrixhaftung stark beeinträchtigen.

Wenn die Glasfasern mit Wasser in Berührung kommen, beginnt ein Korrosionsprozeß, der mit folgenden chemischen Reaktionen beschrieben werden kann:

$$\equiv Si\text{-}O\text{-}Na + H_2O \rightarrow \ \equiv Si\text{-}O\text{-}H + Na^+ + OH^- - \equiv Si\text{-}O$$

$$Ca + 2\,H_2O \rightarrow 2 \equiv Si\text{-}O\text{-}H + Ca^{2+} + 2\,OH^- \equiv Si\text{-}O$$

Die dabei freiwerdende Lauge, z.B. NaOH, KOH, Ca(OH)$_2$ greift das Kieselsäuregerüst der Glasfasern an, wobei ein chemischer Prozeß abläuft, der mit nachfolgender Formel beschrieben werden kann:

$$\equiv Si\text{-}O\text{-}Si \equiv + OH^- \rightarrow \ \equiv Si\text{-}O^- + \equiv Si\text{-}OH$$

Die dabei entstehenden Reaktionsprodukte führen zu einer Beschädigung der Oberfläche der Glasfasern und beeinträchtigen damit die Faserfestigkeit und die Haftung an der Glasoberfläche. C-Glasfasern weisen im Gegensatz zu E-Glasfasern (die weniger als 1,0 Gew.-% Alkalioxide enthalten) eine wesentlich alkalischere Glasoberfläche auf. Daraus resultieren eine verschlechterte Dauerhaftung und eine große Korrosionsanfälligkeit der C-Glasfasern.

Um den Einfluß des Wassers, das bei den meisten Schlichteverfahren unvermeidlich ist, zu reduzieren, ist stets eine Trocknung des beschlichteten Glasfadens oder des Hybridgarnes erforderlich. Läßt man das Wasser zu lange auf das Glas einwirken, führt es zu einer Schädigung des Glases und damit zu einer Verschlechterung der mechanischen Eigenschaften des Verbundes.

DE 198 18 046 A1 beschreibt eine Schlichte für Glasfasern, die in Glas-Polyamid-Hybridgarnen verwendet werden kann. Diese Schlichte enthält Silane bzw. nach einer Hydrolisierung Silanole, sowie eine Reihe anderer Bestandteile.

DE 100 12 814 A1 beschreibt eine nicht-wässrige Schlichte, die aufgrund der Wasserfreiheit den korrosiven Effekt des Wassers vermeiden kann. Auch diese Schlichte enthält Silane und wird während des Herstellprozesses der Glasfasern auf die Glasfasern aufgebracht.

Der Erfindung liegt die Aufgabe zugrunde, die Korrosion von Glasfasern in Hybridgarne auf möglichst einfache Weise zu verringern.

Diese Aufgabe wird durch eine Präparation der eingangs genannten Art dadurch gelöst, daß sie Silanole enthält, die aus stöchiometrischer Hydrolisierung von Wasser und Silanen gebildet sind.

Die Präparation weist zunächst Wasser in einem stöchiometrischen Verhältnis zu den Silanen auf. In der Präparation hydrolisiert dann das Silan zu Silanol. Aufgrund des stöchiometrischen Verhältnisses wird das Wasser dabei praktisch vollständig verbraucht und es bleibt somit kein Restwasser, das zu Korrosionsprozessen im Garn führen könnte. Diese vorteilhafte Wirkung ergibt sich ohne zusätzliche Arbeitsschritte, d.h. die Trocknung eines mit einer derartigen Präparation versehenen Hybridgarnes ist praktisch nicht mehr erforderlich. Dennoch läßt sich die Präparation als Schlichte gut handhaben, was den Herstellungsprozeß von Hybridgarnen erleichtert.

Bevorzugterweise sind die Silane zumindest überwiegend als Aminosilane ausgebildet. Es hat sich gezeigt, daß Aminosilane hervorragende Ergebnisse zeigen. Nach dem Auftrag der Präparation als Schlichte verbleibt kein bzw. nur eine geringe Menge an Wasser an der Glasfaseroberfläche.

Die Erfindung wird bei einem Verfahren der eingangs genannten Art dadurch gelöst, daß man eine Präparation auf die Fasern aufträgt, die aus einer Hydrolisierung von Silanen und Wasser in einem stöchiometrischen Verhältnis zueinander gebildet ist.

Dementsprechend können die Silane mit dem Wasser zu Silanolen hydrolisieren. Es verbleibt praktisch kein Restwasser, das zu einer Schädigung der Glasfasern durch Korrosion führen könnte. Das Trocknen des Hybridgarnes kann entfallen, so daß der damit zusammenhängende Zeitaufwand entfällt und Kosten verringert werden.

Die Schädigung der Gasfasern durch das Wasser wird minimiert bzw. verhindert und Verklebungen, die üblicherweise nach einem Trocknungsprozeß auftreten, können weitgehend vermieden werden. Dies ist insbesondere bei voluminösen Fäden, texturierten Mischgarnen oder Effektgarnen von großer Bedeutung, da durch eine Verklebung das Fadenvolumen reduziert, die Steifigkeit eines daraus hergestellten textilen Flächenmaterials erhöht und die Drapierfähigkeit reduziert wird.

Vorzugsweise verwendet man Aminosilane als Silane. Aminosilane führen bei der erfindungsgemäßen Vorgehensweise zu hervorragenden Ergebnissen.

Bevorzugterweise trägt man die Präparation nach der Hybridisierung der Fasern auf. Die Präparation wird also erst aufgetragen, nachdem die Glasfasern und die Polyolefinfasern zusammengefügt worden sind. Die Präparation muß dann nicht mehr Rücksicht nehmen auf die Handhabungsfähigkeit der Glasfasern und der Polyolefinfasern bei der Hybridisierung des Garnes. Hierfür sind andere Präparationen verwendbar.

Vorzugsweise verwendet man vor der Hybridisierung Schlichten, die keine Haftvermittler enthalten. Die Haftvermittlung wird ausschließlich durch die Präparation hervorgerufen. Da die Präparation nach der Hybridisierung des Garnes aufgetragen wird, behindern Haftvermittler die Hybridisierung des Garnes nicht.

Vorzugsweise trägt man die Präparation in einer Menge im Bereich von 0,5 bis 1,5 Gew.-% des Hybridgarnes, insbesondere von 0,8 bis 1,2 Gew.-%, auf. Diese Menge reicht aus, um die gewünschte Haftung zwischen den Glasfasern und der Polymermatrix zu bewirken.

Bevorzugterweise verwendet man ein Hybridgarn mit einem Titer im Bereich von 300 bis 2000, insbesondere 600 bis 1200 tex. Ein derartiges Hybridgarn ist besonders geeignet zur Herstellung von Verbundwerkstoffen.

Bevorzugterweise handhabt man das Hybridgarn ohne Zwischenschaltung eines Trocknungsschritts weiter. Die weitere Handhabung kann beispielsweise darin bestehen, das Garn aufzuwickeln oder es zu textilen Flächenmaterialien weiterzuverarbeiten. Da man sich aufgrund des fehlendes Restwassers den Schritt des Trocknens sparen kann, erspart man Energiekosten und vor allem Zeit.

Die Erfindung betrifft auch ein Hybridgarn aus Glasund Polyolefinfasern, insbesondere aus Glas- und Polyproplyenfasern, bei dem erfindungsgemäß vorgesehen ist, daß es mit einer Präparation versehen ist, die Silanole enthält, die durch stöchiometrische Hydrolisierung von Silanen und Wasser gebildet sind.

Wie oben bereits ausgeführt, ist es auf diese Weise möglich, Silane, die als Haftvermittler zwischen den Glasfasern und den Polyolefinfasern dienen, zu verwenden, ohne das Risiko einer erheblichen Korrosion der Glasfasern in Kauf nehmen zu müssen. Wenn die Präparation Silane und Wasser in einem stöchiometrischen Verhältnis enthält, dann können die Silane zu Silanolen hydrolisiert werden unter Verwendung des gesamten oder zumindest nahezu des gesamten Wassers.

Hierbei ist bevorzugt, daß die Präparation Aminosilane als Silane aufweist. Diese Aminosilane zeigen hervorragende Ergebnisse.

Die Erfindung betrifft auch einen Verbundwerkstoff, der unter Verwendung eines derartigen Hybridgarnes hergestellt ist.

Schließlich betrifft die Erfindung auch ein textiles Flächenmaterial, das unter Verwendung eines derartigen Hybridgarnes hergestellt ist.

Beispiel:

Ein Hybridgarn aus Glasfasern und Polyolefinfasern wird hergestellt, wie in DE 199 15 955 A1 oder in DE 198 00 725 A1 beschrieben. Dabei werden lediglich die erforderlichen Standardschlichten, die bei der Herstellung der Glasfäden üblich sind, z.B. Trommelschlichte oder Trichterschlichte, vor der Hybridisierung, d.h. vor dem Zusammenführen der Glasfasern und der Polyolefinfasern, verwendet. Diese Standardschlichten enthalten jedoch keine Haftvermittler (Silane) oder sonstige Zusätze. Diese Standardschlichten dienen lediglich dazu, die Glasfasern handhabbar zu machen. Sie müssen noch nicht dafür ausgelegt sein, eine Verbindung zwischen den Glasfasern und den Polyolefinfasern zu bewirken.

Erst nach der Herstellung des Hybridgarnes, also nach dem Vereinigen der. Glasfasern und der Polyolefinfasern, erfolgt der Auftrag einer Präparation, die die durch stöchiometrische Hydrolyse von Silanen gebildeten Silanole enthält. Nach der Hydrolisierung verbleibt praktisch kein Restwasser auf oder im Garn.

Der Auftrag der Präparation auf das Hybridgarn erfolgt vor dem Wickler, beispielsweise mit Hilfe einer Auftragsschlitzrolle. Die Auftragsmenge liegt im Bereich von 0,5 bis 1,5 Gew.-% Bezogen auf das Gewicht des Hybridgarnes, vorzugsweise im Bereich von 0,8 bis 1,2 Gew.-% Der Garntiter liegt im Bereich von 300 bis 2000, vorzugsweise von 600 bis 1200 tex.

Als Silane kommen vor allem Aminosilane zum Einsatz, da diese hervorragende Ergebnisse zeigen. Nach dem Auftrag der Präparation, die auch als Schlichte bezeichnet werden kann, verbleibt kein bzw. nur eine geringe Menge an Wasser an der Glasfaseroberfläche.

Mit dem geschilderten Verfahren kann das Trocknen des Hybridgarnes nach dem Auftragen der Präparation entfallen. Dementsprechend kann man den damit zusammenhängenden Zeitaufwand einsparen. Energiekosten durch die Trocknung entstehen nicht.

Die Schädigung der Glasfasern und damit des Hybridgarnes durch das Wasser wird minimiert. Die üblichen Verklebungen, die nach einem Trocknungsprozeß zu beobachten sind, können vermieden werden. Dies ist insbesondere bei voluminösen Fäden, texturierten Mischgarnen oder Effektgarnen von großer Bedeutung. Ein Verkleben würde ansonsten das Fadenvolumen reduzieren, die Steifigkeit des daraus hergestellten textilen Flächenmaterials erhöhen und die Drapierfähigkeit reduzieren.

Neben diesen Vorteilen hat sich gezeigt, daß durch die Verwendung von Silanen und Wasser in einem stöchiometrischen Verhältnis praktisch keine oder nur geringe Menge von Bindemitteln, Gleitmitteln oder Antistatika für eine Herstellung von textilen Flächenmaterialien aus diesen Hybridgarnen benötigt werden.

**Patentansprüche**

1. Präparation zur Behandlung von Hybridgarnen aus Glas- und Polyolefinfasern, insbesondere aus Glasund Polypropylenfasern, die Silanverbindungen aufweist, **dadurch gekennzeichnet, daß** sie Silanole enthält, die aus stöchiometrischer Hydrolisierung von Wasser und Silanen gebildet sind.

2. Präparation nach Anspruch 1, **dadurch gekennzeichnet, daß** die Silane zumindest überwiegend als Aminosilane ausgebildet sind.

3. Verfahren zum Behandeln von Hybridgarnen aus Glasund Polyolefinfasern, insbesondere aus Glasund Polypropylenfasern, bei dem Silanole auf die Fasern aufgetragen werden, **dadurch gekennzeichnet, daß** man eine Präparation auf die Fasern aufträgt, die aus einer Hydrolisierung von Silanen und Wasser in einem stöchiometrischen Verhältnis zueinander gebildet ist.

4. Verfahren nach Anspruch 3, **dadurch gekennzeichnet, daß** man Aminosilane als Silane verwendet.

5. Verfahren nach Anspruch 3 oder 4, **dadurch gekennzeichnet, daß** man die Präparation nach der Hybridisierung der Fasern aufträgt.

6. Verfahren nach Anspruch 5, **dadurch gekennzeichnet, daß** man vor der Hybridisierung Schlichten verwendet, die keinen Haftvermittler enthalten.

7. Verfahren nach einem der Ansprüche 3 bis 6, **dadurch gekennzeichnet, daß** man die Präparation in einer Menge im Bereich von 0,5 bis 1,5 Gew.-% des Hybridgarnes, insbesondere von 0,8 bis 1,2 Gew.-%, aufträgt.

8. Verfahren nach Anspruch 7, **dadurch gekennzeichnet, daß** man ein Hybridgarn mit einem Titer im Bereich von 300 bis 2000, insbesondere von 600 bis 1200 tex verwendet.

**9.** Verfahren nach einem der Ansprüche 3 bis 8, **dadurch gekennzeichnet, daß** man das Hybridgarn ohne Zwischenschaltung eines Trocknungsschritts weiter handhabt.

**10.** Hybridgarn aus Glas- und Polyolefinfasern, insbesondere aus Glas- und Polyproplyenfasern, **dadurch gekennzeichnet, daß** es mit einer Präparation versehen ist, die Silanole enthält, die durch stöchiometrische Hydrolisierung von Silanen und Wasser gebildet sind.

**11.** Hybridgarn nach Anspruch 10, **dadurch gekennzeichnet, daß** die Präparation Aminosilane als Silane aufweist.

**12.** Verbundwerkstoff, hergestellt unter Verwendung eines derartigen Hybridgarnes nach Anspruch 10 oder 11.

**13.** Textiles Flächenmaterial, hergestellt unter Verwendung eines derartigen Hybridgarnes nach Anspruch 10 oder 11.


**Claims**

**1.** A preparation for treatment of hybrid yams of glass fibres and polyolefin fibres, especially of glass fibres and polypropylene fibres, which preparation comprises silane compounds, **characterised in that** it contains silanols that are formed from stoichiometric hydrolysis of water and silanes.

**2.** A preparation according to claim 1, **characterised in that** the silanes are at least predominantly in the form of aminosilanes.

**3.** A method for treating hybrid yarns of glass fibres and polyolefin fibres, especially of glass fibres and polypropylene fibres, in which method silanols are applied to the fibres, **characterised in that** a preparation that is formed from a hydrolysis of silanes and water in a stoichiometric ratio to one another is applied to the fibres.

**4.** A method according to claim 3, **characterised in that** aminosilanes are used as silanes.

**5.** A method according to claim 3 or 4, **characterised in that** the preparation is applied after hybridisation of the fibres.

**6.** A method according to claim 5, **characterised in that**, prior to hybridisation, sizes that contain no coupling agents are used.

**7.** A method according to any one of claims 3 to 6, **characterised in that** the preparation is applied in a quantity in the range from 0.5 to 1.5 % by weight of the hybrid yarn, especially from 0.8 to 1.2 % by weight.

**8.** A method according to claim 7, **characterised in that** a hybrid yarn having a titre in the range from 300 to 2000, especially from 600 to 1200 tex, is used.

**9.** A method according to any one of claims 3 to 8, **characterised in that** the hybrid yarn is further handled without an intermediate drying step.

**10.** A hybrid yarn of glass fibres and polyolefin fibres, especially of glass fibres and polypropylene fibres, **characterised in that** it is provided with a preparation that contains silanols that are formed by stoichiometric hydrolysis of silanes and water.

**11.** A hybrid yarn according to claim 10, **characterised in that** the preparation comprises aminosilanes as silanes.

**12.** A composite material manufactured using a hybrid yarn according to claim 10 or 11.

**13.** A textile sheet material manufactured using a hybrid yarn according to claim 10 or 11.


**Revendications**

**1.** Préparation pour le traitement de fils hybrides à base de fibres de verre et de polyoléfine, en particulier de fibres de verre et de polypropylène, qui présente des liaisons silanes, **caractérisée en ce qu'**elle contient des silanols, qui sont formés par hydrolyse stoechiométrique d'eau et de silanes.

**2.** Préparation selon la revendication 1, **caractérisée en ce que** les silanes sont constitués au moins de manière prépondérante d'aminosilanes.

**3.** Procédé pour le traitement de fils hybrides à base de fibres de verre et de polyoléfine, en particulier de fibres de verre et de polypropylène, dans lequel on dépose des silanols sur les fibres, **caractérisé en ce que** l'on dépose une préparation sur les fibres, qui est formée par une hydrolyse de silanes et d'eau dans un rapport stoechiométrique.

**4.** Procédé selon la revendication 3, **caractérisé en ce que** l'on utilise des aminosilanes comme silanes.

**5.** Procédé selon la revendication 3 ou 4, **caractérisé en ce que** l'on dépose la préparation après l'hybridation des fibres.

**6.** Procédé selon la revendication 5, **caractérisé en ce que** l'on utilise avant l'hybridation des encollages, qui ne contiennent pas de promoteurs d'adhérence.

**7.** Procédé selon l'une des revendications 3 à 6, **caractérisé en ce que** l'on dépose la préparation en une quantité dans la gamme allant de 0,5 à 1,5 % en poids du fil hybride, en particulier de 0,8 à 1,2 % en poids.

**8.** Procédé selon la revendication 7, **caractérisé en ce que** l'on utilise un fil hybride ayant un titre dans la gamme de 300 à 2000, en particulier de 600 à 1200 tex.

**9.** Procédé selon l'une des revendications 3 à 8, **caractérisé en ce que** l'on continue à manipuler le fil hybride sans insertion d'une étape de séchage.

**10.** Fil hybride à base de fibres de verre et de polyoléfine, en particulier de fibres de verre et de polypropylène, **caractérisé en ce qu'**il est muni d'une préparation, qui contient des silanols, qui sont formés par hydrolyse stoechiométrique de silanes et d'eau.

**11.** Fil hybride selon la revendication 10, **caractérisé en ce que** la préparation présente des aminosilanes comme silanes.

**12.** Matériau composite, préparé en utilisant un tel fil hybride selon la revendication 10 ou 11.

**13.** Matériau textile plat, préparé en utilisant un tel fil hybride selon la revendication 10 ou 11.